# EUROPEAN PATENT SPECIFICATION

(11) **EP 4 464 559 B1**
(45) Date of publication and mention of the grant of the patent: **03.09.2025**
(21) Application number: 24382519.7
(22) Date of filing: 13.05.2024
(51) Int. Cl.: B60R 5/04

(54) **LOAD FLOOR FOR VEHICLE LUGGAGE COMPARTMENT**
LADEBODEN FÜR FAHRZEUGKOFFERRAUM
PLANCHER DE CHARGEMENT POUR COMPARTIMENT À BAGAGES DE VÉHICULE

(30) Priority: 17.05.2023 ES 202330383
(43) Date of publication of application: 20.11.2024
(73) Proprietor: Seat, S.A., 08760 Martorell - Barcelona (ES)
(72) Inventor: HERRERA GENÉ, Joaquin, 08760 Martorell (ES); FERNANDEZ ALBA, Manuel, 08760 Martorell (ES); COLET GALÍ, Joan, 08760 Martorell (ES)
(74) Representative: Elzaburu S.L.P.

(56) References cited:
- JP-A- 2009 298 180
- JP-A- H10 226 278

## Description

### Object of the invention

The present invention has as its object a load floor for a luggage compartment of a vehicle characterized by allowing the correct adaptation of the load floor to the profile of the luggage compartment in at least two positions of placement of the load floor.

The load floor for a vehicle luggage compartment, the object of the present invention, has applications in the field industry of design, manufacture, and marketing of vehicles, especially motor vehicles.

### Background of the invention and technical problem to be solved

In the state of the art, load floors (or double floors) of luggage compartments are known. Load floors are rigid structures that are designed to be located in different areas of the luggage compartment (e.g., at different heights within the luggage compartment). For example, a first area close to the floor (or lower area) of the luggage compartment, which allows maximizing the luggage compartment volume, and a second area flush with the luggage compartment loading mouth and with the height of the folded rear seat, to maximize the user's comfort to load objects in the luggage compartment and to facilitate the introduction of large objects, reducing, in this case, the loading volume of the luggage compartment with respect to the first area close to the floor, but allowing establishing two compartments inside the luggage compartment of the vehicle: a lower compartment, typically intended to house a spare tire and/or vehicle tool kit, and an upper, larger compartment, intended to house luggage and/or larger packages.

When the load floor is placed in the first area mentioned above, the load floor must cover a span of length equal to L1 (according to a longitudinal dimension of the vehicle, i.e., according to a forward direction of the vehicle).

When the load floor is placed in the second area mentioned above, the load floor must cover a span of length equal to L2 (according to a longitudinal dimension of the vehicle, i.e., according to a forward direction of the vehicle).

Generally, the dimension L2 of the space to be covered in the second area is larger than the dimension L1 of the span to be covered in the first area, since L1 includes a dimension or length reduced and limited by fittings intended to allow the folding of the rear seats or rear seats of the vehicle.

Thus, if the load floor is designed with a longitudinal dimension equal to L2 (to be able to cover the entire span in the second area), when moving from the second area to the first area, the load floor encounters the obstacle of the rear seat fittings, preventing it from being correctly positioned at the bottom of the luggage compartment, so that a mismatch or mismatch of the load floor to the first area occurs.

Conversely, if the load floor is designed with a longitudinal dimension equal to L1 (in order to fit snugly into the span of the first area), when the load floor is moved from the first area to the second area, there is a clearance between the load floor and the rear surface of the vehicle's rear seat backrest, a clearance equal to the longitudinal dimension of the rear seat hardware. This clearance causes objects located above the load floor to fall from the upper compartment into the lower compartment.

Therefore, there is a problem associated with the incorrect adaptation of conventional load floors to the size of the space they must cover, in the case of load floors that can occupy various positions in height within the luggage compartment of the vehicle.

Document JP 2009298180 A is known from the prior art. This document discloses a board lifting device for automobile baggage compartment capable of effectively using a baggage compartment space by widely ensuring an opening at an upper side position of a board member without folding/bending a front part of the board member. The load floor disclosed in this document corresponds to the preamble of claim 1.

Document JP H10226278 A is further known from the prior art. This document discloses an automobile package board of the trunk behind a vehicular seat to make it to follow the longitudinal movement of the seat and the tilting of a seat back.

### Description of the invention

In order to solve the above-mentioned drawbacks, the present invention relates to a load floor for a vehicle luggage compartment with the features of claim 1.

The load floor for a luggage compartment of a vehicle, object of the present invention, wherein the load floor is configured to occupy at least:
- a first area (for example, a lower area) of the luggage compartment, having a longitudinal dimension L1 according to a direction of travel of the vehicle, wherein said longitudinal dimension L1 is the separation distance existing between a rear wall of the luggage compartment, according to a direction of travel of the vehicle, and at least one fitting or structure of a rear seat of the vehicle and;
- a second area (for example, an upper area) of the luggage compartment, having a longitudinal dimension L2 according to said vehicle forward direction, wherein said longitudinal dimension L2 is the separation distance between the rear wall of the luggage compartment, according to a vehicle forward direction, and a backrest of the rear seat of the vehicle, and wherein L2 is greater than L1;

The load floor for the luggage compartment of a vehicle, the object of the present invention, comprises a longitudinal dimension, according to the forward direction of the vehicle, equal to L2. It is to be understood in the present invention that the distances in said longitudinal dimensions L1 and L2 of the first and second areas, respectively, are indicative distances. Thus, these longitudinal distances may vary over the entire width of the vehicle luggage compartment due to slight curvatures presented by the rear wall of the luggage compartment, for example. However, despite such variation in longitudinal dimensions, L2 should be larger than L1.

By hardware is to be understood in the present invention as the structural element linking the rear seat of the vehicle to the structure of said vehicle. For example, it may be the components, usually metal, that allow the backrest to pivot relative to the seat cushion of the rear seats. In any case, it must be understood that this fitting is an element that protrudes from the rear seat of the vehicle in a longitudinal direction towards the interior of the luggage compartment. In other words, it would be the area of said rear seat comprising a minimum separation distance with respect to the rear wall of the luggage compartment, according to said longitudinal direction of advance of the vehicle.

In a novel manner the load floor for luggage compartment of a vehicle, object of the present invention comprises at least one slot disposed at the front end of said load floor, so that the load floor is configured so that, when occupying the first area inside the luggage compartment, the at least one slot is located in correspondence with the rear seat fitting or structure of the rear seat of the vehicle.

By means of the load floor for a luggage compartment of a vehicle described above, it is enabled by occupying the second (upper) area of the luggage compartment, the load floor, with its longitudinal dimension L2, is adapted to the longitudinal dimension L2 of the second area of the luggage compartment.

At the same time, by means of the at least one slot it is possible that the load floor can be located in correspondence with the first (lower) area of the luggage compartment, fitting into said first area since the rear seat fitting or structure can pass through the plane of the load floor through the slot.

The load floor may comprise as many slots as structural elements or rear seat (or rear seats) fittings need to be bridged for the correct adjustment of the load floor in the first area of the luggage compartment.

It is to be understood that in the first area of the luggage compartment, the longitudinal dimension of said space is the longitudinal dimension L2, and only in those positions where the luggage compartment comprises a rear seat fitting or structure, said longitudinal dimension is punctually L1.

According to the said first mode of realization, when the load floor is located in the first area, the slot would be in correspondence with said fitting or structure of the rear seat of the vehicle. Thus, the entire front end of the load floor is arranged adjacent to the rear surface of the rear seat, copying its geometry. On the contrary, when the load floor is located in the second area, the front end of said load floor is arranged adjacent to said rear surface of the rear seat, except for the slot.

According to a second and a third embodiments of the load floor, which are not part of the present invention, the load floor comprises at least one damper device arranged in correspondence with a respective slot, wherein said damper device comprises a flap configured to move between:
- a first rest position, where the flap covers the load floor slot (for example when the load floor is in the second area inside the luggage compartment), and;
- a second opening position, where the flap is displaced leaving open a window located in correspondence with the load floor slot under the action of an external force applied on said flap when, by occupying the first area inside the luggage compartment, the load floor comes into contact with the rear seat fitting or structure, allowing said rear seat fitting or structure to pass through the front end of the load floor through the window.

By means of a load floor with the configuration described above, it is achieved to cover the at least one slot by means of the flap in such a way that, when the load floor is located in correspondence with the second area, the at least one slot is covered and there is no possibility of objects placed on the load floor rushing through the slot to the floor or bottom of the luggage compartment.

Also, the flap can be moved to allow the rear seat fitting or structure to pass through the plane defined by the front end of the load floor, through the slot, without being an obstacle that hinders the adjustment of the load floor to the contour of the luggage compartment, when the load floor occupies the first area of the luggage compartment.

According to the second embodiment of the load floor for a luggage compartment of a vehicle, which is not the object of the present invention, the flap of the damper device is a retractable flap.

In this second embodiment, preferably, the gate device comprises guiding means arranged on at least one of the lateral sides defining the window of the gate device, said guiding means being configured to guide the longitudinal displacement of the retractable flap between the first rest position and the second opening position.

Also according to this second embodiment, preferably, the gate device comprises a spring arranged inside a hollow area of the gate device, wherein the spring is configured to exert an elastic force on the retractable flap according to the longitudinal direction of the load floor, so that the retractable flap is configured to move from the first rest position to the second opening position upon the action of an external force applied on said flap in the opposite direction to the elastic force exerted by the spring and of a value greater than said elastic force exerted by the spring.

Thus, the retractable flap is configured for:
- cover the window located in correspondence with the load floor slot when the load floor is located in the second area inside the luggage compartment, so that the front end of the load floor generates a continuous surface across the width of said load floor, and;
- the flap can move along lateral guides, being hidden inside the hollow area of the flap device when, as the load floor occupies the first area inside the luggage compartment, the rear seat fitting or structure exerts a force on the flap in the opposite direction to the elastic force exerted by the spring and greater than the elastic force exerted by the spring.

This configuration corresponding to the second embodiment of the load floor, apart from providing an optimal slot occlusion effect when the load floor occupies the second (upper) area of the luggage compartment, also provides an optimal finish in practical and aesthetic terms, since when the load floor is in the first area (e.g., lower area) of the luggage compartment, there is no trace of the retractable flap protruding from the front end of the load floor.

Alternatively, according to the third embodiment of the load floor for a luggage compartment of a vehicle, which is neither the object of the present invention, the flap of the damper device is a pivoting flap, said pivoting flap being linked to the body of the damper device by means of a hinge defining an axis of rotation of the flap in a transverse direction of the load floor, such that the flap is configured to pivot between the first rest position, being flush with the plane of the load floor, and the second opening position, being raised with respect to the plane of the load floor when, as the load floor occupies the first area within the luggage compartment, the rear seat fitting or structure pushes the flap from a lower, in-use side of the load floor.

Thus, in this second embodiment of the load floor for luggage compartment of a vehicle, which is not the object of the present invention, the pivoting flap is configured to:
- cover the window located in correspondence with the load floor slot, being flush with the plane of the load floor, when the load floor is located in the second area inside the luggage compartment, and;
- rotate around the hinge, being raised, or alternatively lowered, with respect to the plane of the load floor when, as the load floor occupies the first area inside the luggage compartment, the rear seat fitting or structure pushes the flap from a lower side, or alternatively from an upper side, in use, of the load floor.

According to the second embodiment, this configuration of the load floor provides greater constructive simplicity than the first embodiment, as the device lacks a spring gate and a hollow area. Alternatively, it may also comprise a spring, in order to define a rest position and an opening position, so that, in the absence of an external force applied on said pivoting flap, the same recovers the rest position.

According to a fourth embodiment of the load floor for a luggage compartment of a vehicle, object of the present invention, the slot is covered with carpeting, with at least one cut configured to allow the carpeting to be raised with respect to the plane of the load floor upon the action of an external force applied on said carpeting when, upon occupying the first area inside the luggage compartment, the slot is located in correspondence with the fitting or structure of the rear seat of the vehicle.

The configuration of the load floor, according to this fourth embodiment of the invention, is the simplest in constructive terms, and offers good performance when the load floor occupies the first (lower) position in the luggage compartment of the vehicle, although it may not optimally ensure that objects placed on the load floor do not rush through the slot when the load floor occupies the second (upper) position within the luggage compartment.

Finally, the present invention also relates to a vehicle comprising:
- a rear wall of the luggage compartment, which defines a lower loading edge of the luggage compartment;
- a rear seat, which in turn comprises a backrest of said rear seat and at least one fitting or structure of said rear seat, and;
- a load floor as described above with respect to the present invention.

### Brief description of the figures

As part of the explanation of at least one embodiment of the invention the following figures are included.
Figure 1: It shows a schematic view of a cross-section of the luggage compartment of a vehicle, where can be observed a load floor susceptible to occupying a first lower area and a second upper area.
Figure 2: It shows a schematic view in perspective of a first embodiment of the load floor for a luggage compartment of a vehicle object of the present invention, wherein a slot for the possible placement of a retractable flap is appreciated.
Figure 3: It shows a perspective view of a possible embodiment of the load floor hatch device for luggage compartment of a vehicle, which is not object of the present invention, according to a second embodiment.

### Detailed description

The present invention relates, as mentioned above, to a load floor (100) for the luggage compartment (200) of a vehicle.

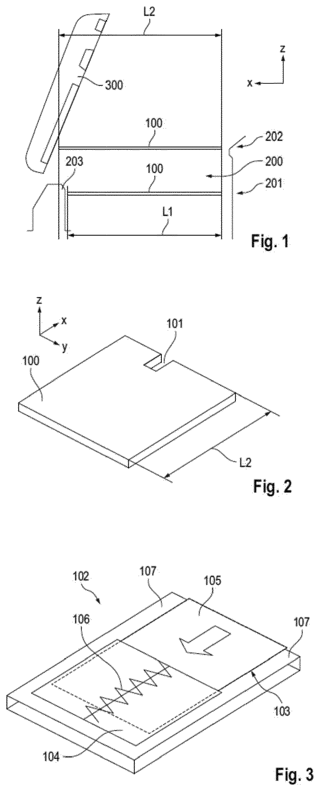

Figure 1 schematically shows a cross-section of the luggage compartment (200), i.e., showing said luggage compartment (200) in the longitudinal axis according to the forward direction of a vehicle and vertical axis according to a direction perpendicular to the running plane of a vehicle, wherein can be seen a load floor (100) capable of occupying a first lower area (201) (at a height or dimension, "Z", lower) and a second upper area (202) (at a height or dimension, "Z", higher), in the luggage compartment (200).

The first area (201) has a longitudinal dimension (according to a forward direction, "X", of the vehicle) equal to L1. This longitudinal dimension, L1, is the length existing between a rear wall (according to a forward direction of the vehicle) of the luggage compartment (200) and at least one fitting (203) or structure of the rear seat (300) of the vehicle. It is understood that said longitudinal dimension L1 is the minimum dimension along said longitudinal axis, the rest of the luggage compartment (200) having a longitudinal dimension greater than L1.

The second area (202) has a longitudinal dimension (according to a forward direction, "X", of the vehicle) equal to L2. This longitudinal dimension, L2, is the length existing between a rear wall (according to a forward direction of the vehicle) of the luggage compartment (200) and the backrest of the rear seat (300) of the vehicle.

As can be seen in Figure 1, L2 is greater than L1.

Therefore, in a conventional load floor (100), if the longitudinal dimension of the load floor (100) is equal to L2, when the load floor (100) moves from the second area (202) to the first area (201), the load floor (100) bumps against the hardware (203) of the rear seat (300) of the vehicle, preventing the load floor (100) from being able to lie flat in said first area (201).

On the other hand, in a conventional load floor (100), if the longitudinal dimension of the load floor (100) is equal to L1, when the load floor (100) is moved from the first area (201) lower to the second area (202) upper, a gap or clearance occurs along the entire width of the load floor (100) between the load floor (100) and the back of the rear seat (300) of the vehicle, a gap through which objects placed on the load floor (100) could be precipitated.

Thus, in order to avoid the aforementioned drawbacks, the load floor (100) object of the present invention, as shown in Figure 2, comprises a longitudinal dimension (in the forward direction, "X", of the vehicle) equal to L2. The load floor (100) of the present invention comprises at least one slot (101) or notch, located in correspondence with the front or leading edge of the load floor (100) (according to a forward direction, "X", of the vehicle), and located at an intermediate point of the transverse dimension, "Y", of the load floor (100) (in correspondence with the position occupied by one of the fittings (203) of the rear seat (300) of the vehicle). In said Figure 2, the load floor (100) is shown with a single slot (101) and there may be as many slots (101) as there are fittings in the structure of the luggage compartment (100).

According to a first and a second embodiment of the load floor (100), which are not object of the present invention, the load floor (100) comprises a damper device (102) configured to be positioned in correspondence with the slot (101) of the load floor (100).

As shown in Figure 3, according to a second embodiment of the load floor (100), which is not subject of the present invention, the damper device (102) comprises a retractable flap (105) configured to be concealed or hidden inside a hollow area (104) of the damper device (102).

Thus, when the load floor (100) is located in the second area (202) of the luggage compartment (200) (raised or upper area of the luggage compartment (200)), the retractable flap (105) of the damper device (102) is extended, covering the slot (101), by the action of the elastic force exerted by a spring (106) located inside the hollow area (104) of the damper device (102).

When the load floor (100) is moved from the second upper area (202) of the luggage compartment (200) to the first lower area (201) of the luggage compartment (200), the load floor (100) contacts the corresponding fitting (203) of the rear seat (300) of the vehicle in correspondence with the groove (102) and, either by the weight of the load floor (100) itself or the pressure exerted by a user on the load floor (100) to adapt it to the first area (201) of the luggage compartment (200), the pressure exerted by the fitting (203) against the retractable flap (105) of the tailgate device (102) causes the retractable flap (105) to retract (overcoming the elastic force of the spring (106)), moving along lateral guides (107) until it is hidden or retracted inside the hollow area (104), exposing a window (103) located in correspondence with the slot (101) of the load floor (100), so that the load floor (100) can occupy the first lower area (201) of the luggage compartment (200) without encountering the fitting (203) of the rear seat (300) of the vehicle, since said fitting (203) is located in correspondence with the window (103) of the slot (101) of the load floor (100).

According to a second embodiment (not shown in the Figures) of the load floor (100), which is not object of the present invention, the flap (105) of the damper device (102) is attached by means of at least one hinge to a body of the damper device (102), said hinge defining an axis of rotation (in a transverse direction or dimension, "Y") of the flap (105). In this case, when the load floor (100) is moved from the second upper area (202) of the luggage compartment (200) to the first lower area (201) of the luggage compartment (200), the load floor (100) contacts the corresponding fitting (203) of the rear seat (300) of the vehicle in correspondence with the slot (102) and, either by the weight of the load floor (100) itself or the pressure exerted by a user on the load floor (100) to adapt it to the first area (201) of the luggage compartment (200), the pressure exerted by the fitting (203) against the flap (105) of the hatch (102) causes the flap (105) to rotate with respect to the body of the hatch (102) (and with respect to the plane of the load floor (100)) and to be raised with respect to the plane of the load floor (100), exposing a window (103) located in correspondence with the slot (101) of the load floor (100), so that the load floor (100) can occupy the first lower area (201) of the luggage compartment (200) without encountering the fitting (203) of the rear seat (300) of the vehicle, since said fitting (203) is located in correspondence with the window (103) of the slot (101) of the load floor (100).

According to a third embodiment (not shown in the Figures) of the load floor (100) object of the present invention, the load floor (100) lacks a damper device (102) in correspondence with the slot (101). In this third configuration, it is provided that the slot (101) is covered by the load floor carpeting (100), there being at least one cut in the carpeting in correspondence with the slot (101), such that when the load floor (100) is moved from the second upper area (202) of the luggage compartment (200) to the first lower area (201) of the luggage compartment (200), the carpet of the load floor (100) contacts the corresponding fitting (203) of the rear seat (300) of the vehicle in correspondence with the slot (102) and, either by the weight of the load floor (100) itself or the pressure exerted by a user on the load floor (100) to adapt it to the first area (201) of the luggage compartment (200), the pressure exerted by the fitting (203) against the carpeting of the load floor (100) causes the carpeting to open at the existing cut in correspondence with the slot (101) and to be raised with respect to the plane of the load floor (100), exposing a window (103) located in correspondence with the slot (101) of the load floor (100), so that the load floor (100) can occupy the first lower area (201) of the luggage compartment (200) without encountering the fitting (203) of the rear seat (300) of the vehicle, since said fitting (203) is located in correspondence with the window (103) of the slot (101) of the load floor (100).

## Claims

1. A load floor (100) for a luggage compartment (200) of a vehicle, wherein the load floor (100) is configured to occupy at least:
- a first area (201) of the luggage compartment (200), having a longitudinal dimension L1 according to a forward direction of the vehicle, wherein said longitudinal dimension L1 is the separation distance existing between a rear wall of the luggage compartment (200), according to a forward direction of the vehicle, and at least one fitting (203) or structure of a rear seat (300) of the vehicle and;
- a second area (202) of the luggage compartment (200), having a longitudinal dimension L2 according to said vehicle forward direction, wherein said longitudinal dimension L2 is the separation distance between the rear wall of the luggage compartment (200), according to a vehicle forward direction, and a backrest of the rear seat (300) of the vehicle, and wherein L2 is greater than L1;
wherein the load floor (100) comprises a longitudinal dimension, according to the forward direction of the vehicle, equal to L2;
wherein the load floor (100) comprises at least one slot (101) arranged at the front end of said load floor (100), such that the load floor (100) is configured so that, when occupying the first area (201) inside the luggage compartment (200), the at least one slot (101) is located in correspondence with the fitting (203) or structure of the rear seat (300) of the vehicle;
**characterized in that** the slot (101) is covered with carpeting, with at least one cut configured to allow the carpeting to be raised with respect to the plane of the load floor (100) upon the action of an external force applied on said carpeting when, when occupying the first area (201) inside the luggage compartment (200), the slot (101) is located in correspondence with the fitting (203) or structure of the rear seat (300) of the vehicle.

2. Vehicle **characterized by** comprising:
- a rear wall of the luggage compartment (200),
- a rear seat (300), which in turn comprises a backrest of said rear seat (300) and at least one fitting (203) or structure of said rear seat (300), and
- a load floor (100) according to claim 1.

## Patentansprüche

1. Ladeboden (100) für einen Kofferraum (200) eines Fahrzeugs, wobei der Ladeboden (100) konfiguriert ist, um mindestens einzunehmen:
- einen ersten Bereich (201) des Kofferraums (200), der eine Längsabmessung L1 gemäß einer Vorwärtsrichtung des Fahrzeugs aufweist, wobei die Längsabmessung L1 der Trennabstand ist, der zwischen einer Rückwand des Kofferraums (200) gemäß einer Vorwärtsrichtung des Fahrzeugs und mindestens einem Beschlags (203) oder einer Struktur eines Rücksitzes (300) des Fahrzeugs vorhanden ist, und;
- einen zweiten Bereich (202) des Kofferraums (200), der eine Längsabmessung L2 gemäß der Vorwärtsrichtung des Fahrzeugs aufweist, wobei die Längsabmessung L2 der Trennabstand zwischen der Rückwand des Kofferraums (200) gemäß einer Vorwärtsrichtung des Fahrzeugs und einer Rückenlehne des Rücksitzes (300) des Fahrzeugs ist, und wobei L2 größer als L1 ist;
wobei der Ladeboden (100) eine Längsabmessung gemäß der Vorwärtsrichtung des Fahrzeugs, die gleich L2 ist, umfasst;
wobei der Ladeboden (100) mindestens einen Schlitz (101), der an dem vorderen Ende des Ladebodens (100) derart angeordnet ist, umfasst, dass der Ladeboden (100) konfiguriert ist, sodass, wenn er den ersten Bereich (201) in dem Kofferraum (200) einnimmt, sich der mindestens eine Schlitz (101) in Übereinstimmung mit dem Beschlag (203) oder der Struktur des Rücksitzes (300) des Fahrzeugs befindet;
**dadurch gekennzeichnet, dass** der Schlitz (101) mit einem Teppich bedeckt ist, wobei mindestens ein Schnitt konfiguriert ist, um zu ermöglichen, dass der Teppich hinsichtlich der Ebene des Ladebodens (100) angehoben werden kann, sobald die Aktion äußere Kraft auf den Teppich ausübt, wenn, wenn der erste Bereich (201) in dem Kofferraum (200) eingenommen wird, sich der Schlitz (101) in Übereinstimmung mit dem Beschlag (203) oder der Struktur des Rücksitzes (300) des Fahrzeugs befindet.

2. Fahrzeug **gekennzeichnet durch** umfassend:
- eine Rückwand des Kofferraums (200),
- einen Rücksitz (300), der wiederum eine Rückenlehne des Rücksitzes (300) und mindestens einen Beschlag (203) oder eine Struktur des Rücksitzes (300) umfasst, und
- einen Ladeboden (100) nach Anspruch 1.

## Revendications

1. Plateau de chargement (100) pour un compartiment à bagages (200) d'un véhicule, dans lequel le plateau de chargement (100) est conçu pour occuper au moins :
- une première zone (201) du compartiment à bagages (200), ayant une dimension longitudinale L1 selon la direction avant du véhicule, dans lequel ladite dimension longitudinale L1 est la distance de séparation existant entre une paroi arrière du compartiment à bagages (200), selon la direction avant du véhicule, et au moins un raccord (203) ou une structure d'un siège arrière (300) du véhicule et ;
- une seconde zone (202) du compartiment à bagages (200), ayant une dimension longitudinale L2 selon ladite direction avant du véhicule, dans lequel ladite dimension longitudinale L2 est la distance de séparation entre la paroi arrière du compartiment à bagages (200), selon une direction avant du véhicule, et un dossier du siège arrière (300) du véhicule, et dans lequel L2 est supérieure à L1 ;
dans lequel le plateau de chargement (100) comprend une dimension longitudinale, selon la direction avant du véhicule, égale à L2 ;
dans lequel le plateau de chargement (100) comprend au moins une fente (101) disposée à l'extrémité avant dudit plateau de chargement (100), de sorte que le plateau de chargement (100) est conçu pour que, lors de l'occupation de la première zone (201) à l'intérieur du compartiment à bagages (200), l'au moins une fente (101) soit située en correspondance avec la garniture (203) ou la structure du siège arrière (300) du véhicule ;
**caractérisé en ce quela** fente (101) est recouverte de moquette, avec au moins une découpe conçue pour permettre à la moquette de se soulever par rapport au plan du plateau de chargement (100) sous l'action d'une force extérieure appliquée sur ladite moquette lorsque, en occupant la première zone (201) à l'intérieur du compartiment à bagages (200), la fente (101) est située en correspondance avec la garniture (203) ou la structure du siège arrière (300) du véhicule.

2. Véhicule **caractérisé en ce qu'il** comprend :
- une paroi arrière du compartiment à bagages (200),
- un siège arrière (300), qui comprend à son tour un dossier dudit siège arrière (300) et au moins un raccord (203) ou une structure dudit siège arrière (300), et
- un plateau de chargement (100) selon la revendication 1.
